# EUROPÄISCHE PATENTSCHRIFT

(11) **EP 1 549 453 B1**
(45) Veröffentlichungstag und Bekanntmachung des Hinweises auf die Patenterteilung: **06.06.2007**
(21) Anmeldenummer: 03747692.6
(22) Anmeldetag: 06.10.2003
(51) Int. Cl.: B23K 9/28

(54) **ABSCHALTBOX FÜR EINE ROBOTERANLAGE**
DISCONNECTION BOX FOR A ROBOT SYSTEM
ELEMENT SECTIONNEUR POUR UNE INSTALLATION ROBOTIQUE

(30) Priorität: 08.10.2002 AT 15242002
(43) Veröffentlichungstag der Anmeldung: 06.07.2005
(73) Patentinhaber: Fronius International GmbH, 4363 Pettenbach (AT)
(72) Erfinder: HUBINGER, Manfred, A-4550 Kremsmünster (AT); BINDER, Georg, A-4643 Pettenbach (AT)
(74) Vertreter: Sonn & Partner Patentanwälte
(86) Internationale Anmeldenummer: PCT/AT2003/000300
(87) Internationale Veröffentlichungsnummer: WO 2004/033141

(56) Entgegenhaltungen:
- EP-A- 0 352 576
- GB-A- 2 118 524
- US-A- 4 935 597
- US-A- 5 018 705
- PATENT ABSTRACTS OF JAPAN vol. 1996, no. 08, 30. August 1996 (1996-08-30) & JP 08 090481 A (YASKAWA ELECTRIC CORP;NASU TOA KK), 9. April 1996 (1996-04-09)

## Beschreibung

Die Erfindung betrifft eine Abschaltbox für eine Roboteranlage, mit einem in einem Gehäuse federnd gelagerten und mit Kontakt- bzw. Schaltelementen verbundenen Kupplungsmittel, welches zum Anschluss an einen Brennerkörper und ein Schlauchpaket oder einen Brennergriff, der mit dem Schlauchpaket verbunden ist, ausgebildet ist, wobei im aus zwei Teilen bestehenden Gehäuse zwei einander gegenüberliegende Öffnungen zum Anschluss des Kupplungsmittels an den Brennerkörper und zum Anschluss des Kupplungsmittels an das Schlauchpaket oder den Brennergriff vorgesehen sind, wobei das Kupplungsmittel eine Abstützfläche zur punktuellen Anlage am Gehäuse aufweist.

Aus dem Stand der Technik sind Kollisionsschutzerkennungen bzw. Abschaltboxen bekannt, die jedoch direkt im Roboter, also in einem Roboterarm, eingebaut sind. An diese im Roboter integrierten Abschaltboxen werden die Komponenten befestigt. Nachteilig ist hierbei, dass diese integrierten Abschaltboxen das gesamte Gewicht der befestigten Komponenten aufnehmen müssen und somit sehr steif ausgelegt werden müssen, wodurch das Abschaltverhalten beeinträchtigt wird.

Aus der US 4 540 869 A ist ein Schweißbrenner zur Verwendung in einem Schweißroboter mit einem Kollisionsschutz bekannt, der ein federnd gelagertes Kupplungsmittel aufweist, welches zum Anschluss an ein Schlauchpaket und einen Schweißbrenner ausgebildet ist. Nachteilig dabei ist die relativ komplizierte Konstruktion, die auch dazu dient, radiale Bewegungen des Schweißbrenners zuzulassen.

Die JP 7-178546 A zeigt ebenfalls einen Schweißbrenner mit einem Kollisionsschutz, wobei der Anschluss des Schlauchpaketes nicht dargestellt ist. Sollte das Schlauchpaket am Kupplungsmittel befestigt werden, muss die Abschaltbox ein sehr hohes Gewicht der daran befestigten Komponenten aufnehmen, wodurch das Abschaltverhalten beeinträchtigt wird.

Die GB 1 224 180 A zeigt eine Vorrichtung zum Steuern der Bewegung eines Werkzeugs, beispielsweise eines Schweißbrenners, bei der zum Aufnehmen der Bewegungsbahn des Werkzeugs ein Sucher montiert werden kann. An einem mit dem Sucher verbundenen Roboterarm sind Elemente angeordnet, welche eine Kollision des Suchers mit dem Werkstück erkennen und dadurch die Motoren der Robotersteuerung entsprechend ansteuern. Durch den Einbau der Mittel zur Erkennung einer Kollision im Roboterarm wird ebenfalls das Abschaltverhalten nachteilig beeinflusst.

Die JP 08090481 A beschreibt eine Abschaltbox der gegenständlichen Art, welche aus einem Gehäuse mit darin federnd gelagertem Kupplungsmittel mit zwei Öffnungen im Gehäuse besteht, wobei bei Kollision des Schweißbrenners mit dem Werkstück das Kupplungsmittel bewegt wird und in der Folge ein Schaltelement betätigt wird. Die Auslösung der Kontakt- bzw. Schaltelemente erfolgt dabei indirekt über eine Stange, wodurch der Mechanisumus träge ist und somit die Ansprechzeit erhöht und die Empfindlichkeit verringert wird.

Die Aufgabe der vorliegenden Erfindung besteht daher in der Schaffung einer eigenständigen Abschaltbox, die an jeder beliebigen Stelle bzw. Position der Roboteranlage flexibel eingesetzt werden kann. Weiters soll die Abschaltbox möglichst einfach aufgebaut sein und durch ein möglichst rasches und leichtes Ansprechen gekennzeichnet sein.

Die erfindungsgemäßen Aufgaben werden dadurch gelöst, dass die Abstützfläche mit den Kontakt- bzw. Schaltelementen verbunden ist, so dass durch Abheben der Abstützfläche vom Gehäuse das Kontakt- bzw. Schaltelement aktiviert bzw. deaktiviert wird und ein Signal vom Kontakt- bzw. Schaltelement an eine angeschlossene Steuervorrichtung oder die Roboteranlage weitergeleitet wird. Vorteilhaft ist hierbei, dass dadurch die Abschaltbox direkt im Schweißbrenner, also zwischen den einzelnen Komponenten des Schweißbrenners, angeordnet werden kann. Damit wird erreicht, dass die Abschaltbox möglichst nahe im gefährdeten Bereich positioniert ist und somit bereits leichte Kollisionen erkannt werden können. Ein weiterer Vorteil liegt auch darin, dass mit der Abschaltbox das Schlauchpaket bzw. der Brennergriff verbunden werden kann, wodurch dieser das Gewicht der Komponenten aufnimmt, so dass das federnd gelagerte Kupplungsmittel der Abschaltbox nur mehr auf das Gewicht des Brennerkörpers ausgelegt werden muss. Die punktuelle Anlage des Kupplungsmittels am Gehäuse sichert ein rasches Ansprechverhalten der Abschaltbox, da beim Auftreten einer Kollision durch die Öffnung einer punktuellen Lagerung die Kollision sofort erkannt wird und durch entsprechendes Anordnen von Kontaktelementen bzw. Schaltelementen eine entsprechende Steuerung der Roboteranlage erfolgen kann. Somit wird ein sehr gutes Ansprechverhalten erreicht.

Weitere vorteilhafte Ausgestaltungen sind in den Ansprüchen 2 bis 11 beschrieben. Die sich daraus ergebenden Vorteile können aus der Beschreibung entnommen werden.

Die vorliegende Erfindung wird anhand der beigefügten Zeichnungen, welche ein Ausführungsbeispiel der Abschaltbox zeigt, näher erläutert.

Darin zeigen:
Fig. 1 eine schematische Darstellung einer Schweißmaschine bzw. eines Schweißgerätes;
Fig. 2 eine schematische Darstellung einer Anordnung der Abschaltbox am Schweißbrenner zwischen Brennerkörper und Schlauchpaket;
Fig. 3 eine weitere Darstellung einer Anordnung der Abschaltbox am Schweißbrenner zwischen Brennerkörper und Brennergriff;
Fig. 4 eine Frontansicht auf die Abschaltbox ohne angeschlossene Komponenten;
Fig. 5 eine Schnittdarstellung durch die Abschaltbox gemäß den Linien v-v in Fig. 4;
Fig. 6 eine Schnittdarstellung durch die Abschaltbox gemäß den Linien VI-VI in Fig. 4;
Fig. 7 eine Schnittdarstellung durch die Abschaltbox gemäß den Linien VII-VII in Fig. 4.

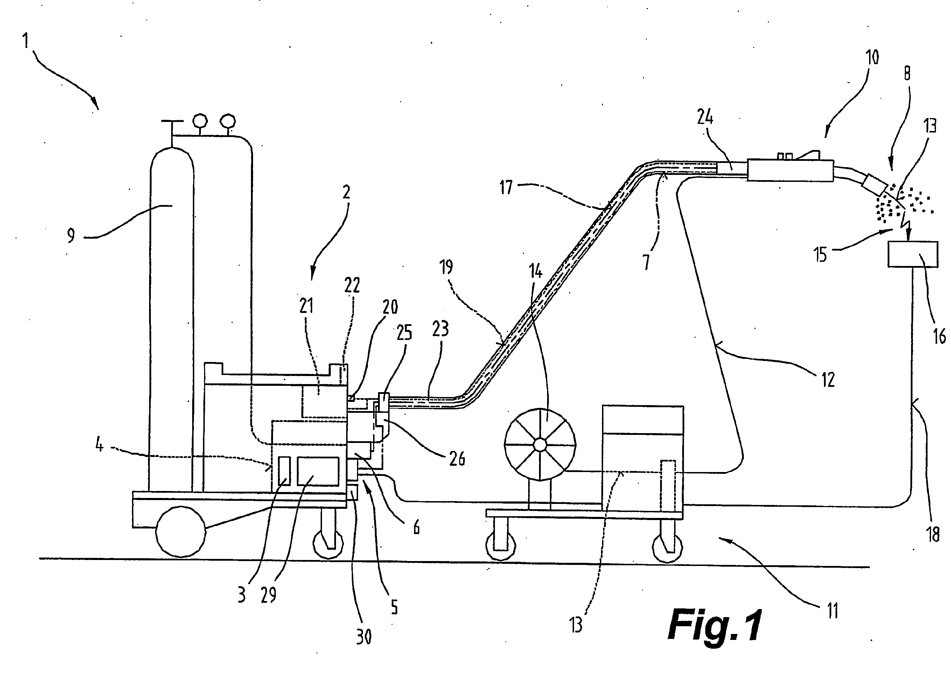

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt. Selbstverständlich ist es möglich, dass die erfindungsgemäße Lösung bei einer Stromquelle bzw. einer Schweißstromquelle eingesetzt werden kann.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 in den Bereich des Brenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen dem Schweißdraht 13 und einem Werkstück 16 wird über eine Schweißleitung 17 vom Leistungsteil 3 der Stromquelle 2 dem Schweißbrenner 10 zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Brenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 bzw. Zentralanschluss mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen.

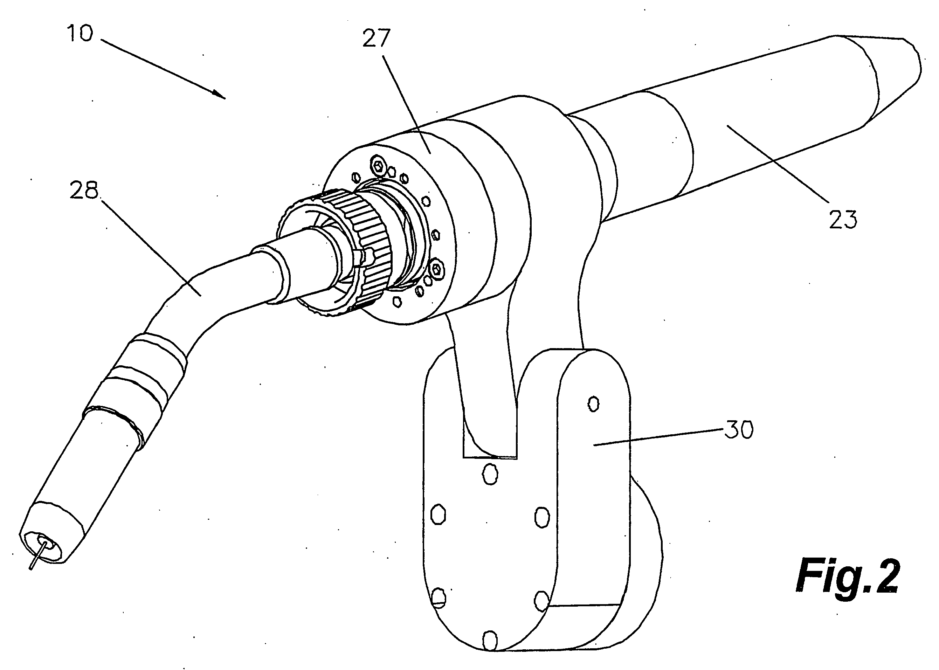

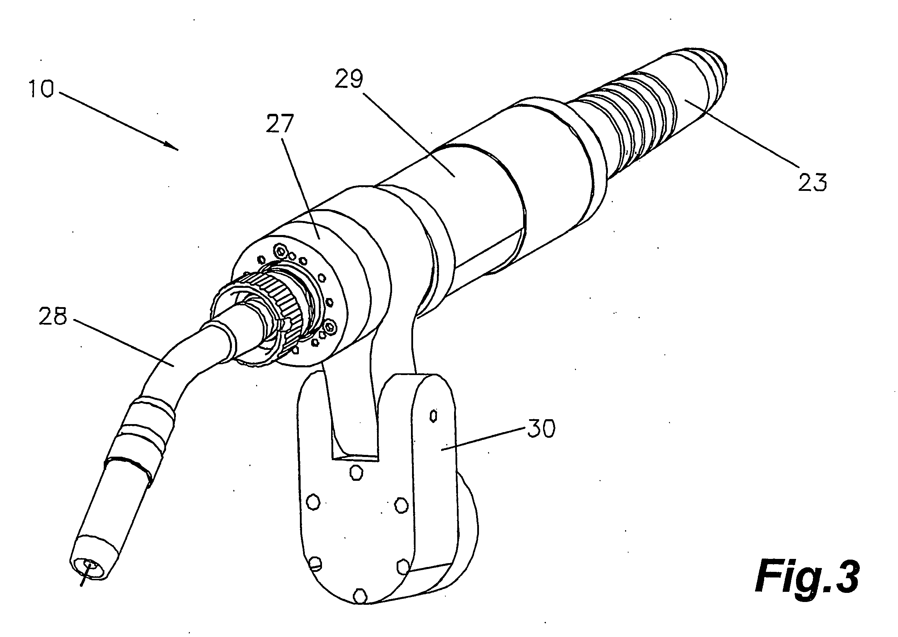

In den Fig. 2 und 3 ist ein Anwendungsbeispiel einer Abschaltbox 27 für eine Roboteranlage, insbesondere eine Schweißanlage, dargestellt. Dabei wird die Abschaltbox 27 direkt am Schweißbrenner 10 angeordnet, wobei in Fig. 2 diese zwischen einem Brennerkörper 28 und einem Schlauchpaket 23 und in Fig. 3 zwischen dem Brennerkörper 28 und einem Brennergriff 29, beispielsweise mit integriertem Drahtvorschub, an dem das Schlauchpaket 23 angeschlossen ist, angeordnet ist. Der Schweißbrenner 10 mit der integrierten Abschaltbox 27 wird über ein Befestigungsmittel 30 an einer Roboteranlage (nicht dargestellt) befestigt.

Die Anwendung der Abschaltbox 27 direkt am Schweißbrenner 10 hat den Vorteil, dass die Abschaltbox 27 weniger Gewicht aufnehmen muss und somit ein besseres Abschaltverhalten bei einer Kollision erzielt wird. Weiters wird durch die eigenständige Abschaltbox 27 erreicht, dass eine optimale Anpassung bei der Anordnung der Abschaltbox 27 vorgenommen werden kann, da diese an den unterschiedlichsten Stellen an der Roboteranlage eingesetzt werden kann. Es ist auch möglich, die Abschaltbox 27 derart einzusetzen, dass keine Schweißkomponenten angeschlossen werden, sondern diese beispielsweise zwischen dem Roboterarm und dem Befestigungsmittel 30 für den Schweißbrenner 10 eingesetzt wird.

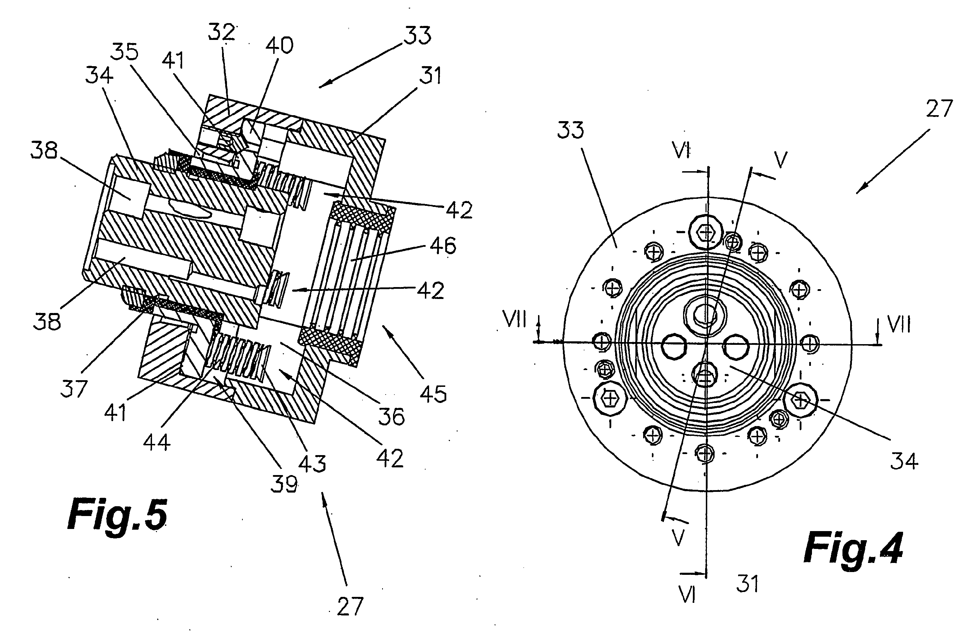

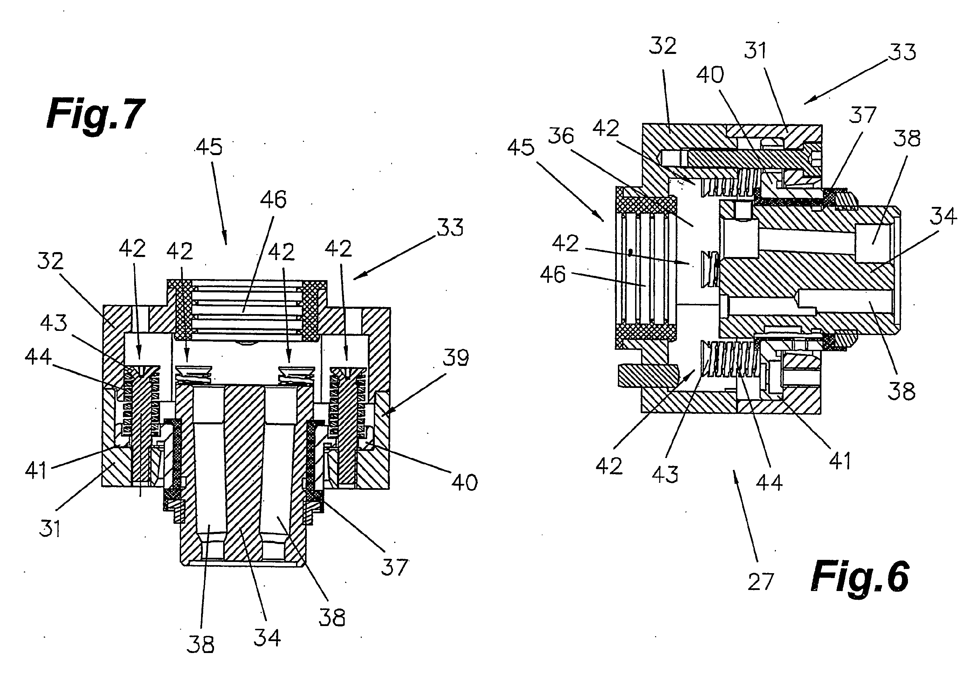

In den weiteren Fig. 4 bis 7 ist die Abschaltbox 27 im Detail schematisch dargestellt, wobei in einem aus zwei Teilen 31, 32 bestehenden Gehäuse 33 ein Kupplungsmittel 34 federnd gelagert ist. Das Kupplungsmittel 34 ist zum Anschluss des Schweißbrenners 10, insbesondere deren Komponenten, und des Schlauchpaketes 23 ausgebildet, wobei dabei ein handelsüblicher Zentralanschluss bzw. Kupplungsvorrichtung aus der Schweißtechnik für die Verbindung des Schlauchpaketes 23 mit dem Schweißbrenner 10 am Kupplungsmittel 34 realisiert ist. Die Funktion der Abschaltbox 27 liegt darin, dass eine Kollisionserkennung durchgeführt wird, wobei die Abschaltbox 27 als kompakte Baueinheit und somit als eine eigenständige Komponente ausgebildet ist und je nach Einsatzgebiet entsprechend angeordnet werden kann.

Die Abschaltbox 27 ist derart aufgebaut, dass in dem aus zwei Teilen 30, 31 bestehenden Gehäuse 33 das Kupplungsmittel 34 federnd gelagert ist, wobei das Kupplungsmittel 34 durch eine Öffnung 35 aus dem Gehäuse 33 herausragt, wogegen das weitere Ende des Kupplungsmittels 34 im Inneren des Gehäuses 33 enden kann. Auf das hinausragende Ende des Kupplungsmittels 34 kann der Brennerkörper 28 befestigt werden. Im Inneren des Gehäuses 33 wird ein Hohlraum 36 gebildet. Bevorzugt ist das Kupplungsmittel 34 gegenüber dem Gehäuse 33 isoliert, wodurch über das Kupplungsmittel 34 elektrische Energie, insbesondere der Schweißstrom, übertragen werden kann. Hierzu ist in dem dargestellten Ausführungsbeispiel ein Isolierring 37 angeordnet. Im Kupplungsmittel 34 können Kanäle 38 angeordnet sein, wodurch die zugeführten Medien, wie beispielsweise Kühlflüssigkeit, Schutzgas usw., von einer Seite des Kupplungsmittels 34 auf die andere Seite übertragen werden kann und somit die Funktion des Schweißbrenners 10 gewährleistet ist. Weiters weist das Kupplungsmittel 34 eine Abstützfläche 39 zur punktuellen Anlage am Gehäuse 33 auf, die in dem gezeigten Ausführungsbeispiel durch einen Außenring 40 mit L-förmigem Querschnitt gebildet ist, der am Isolierring 37 befestigt ist. Dieser Außenring 40 mit L-förmigem Querschnitt kann dabei umlaufend ausgeführt sein oder auch nur einige Abschnitte ausbilden. Damit wird einerseits erreicht, dass das Kupplungsmittel 34 gegen das Herausrutschen aus dem Gehäuse 33 gesichert ist und andererseits eine punktuelle Auflage im Gehäuse 33 ausgebildet werden kann. Es ist nämlich wesentlich, dass das Kupplungsmittel 34 nur punktuell am Gehäuse 33 anliegt, so dass bei einer Kollision ein Abheben eines Punktes vom Gehäuse 33 zustande kommt. Selbstverständlich ist es möglich, dass der Außenring 40 auch vom Kupplungsmittel 34 gebildet wird.

Um eine punktuelle Auflage bzw. Anlage am Gehäuse 33 zu erreichen, sind am Außenring 40 Vorsprünge 41 angeordnet, so dass eine punktuelle Auflage am Gehäuse 33 geschaffen wird. Dabei ist es auch möglich, anstelle der Vorsprünge 41 andere Distanzelemente, wie beispielsweise Kugeln, zur Bildung einer punktuellen Auflage zwischen der Abstützfläche 39 und dem Gehäuse 33 anzuordnen. Bevorzugt werden hierbei drei oder fünf Vorsprünge 41 angeordnet. Die Befestigung des Kupplungsmittels 34 erfolgt mit einer Schraubverbindung 42 durch den Außenring 40 bzw. die Abstützfläche 39, wobei hierzu zwischen einem Schraubenkopf 43 und dem Außenring 40 bzw. der Abstützfläche 39 ein Federelement 44 angeordnet ist. Somit wird das gesamte Kupplungsmittel 34 federnd gelagert, so dass bei einer Kollision der angeschlossenen Teile, insbesondere des Brennerkörpers 28, mit einem festen Gegenstand das Kupplungsmittel 34 entsprechend verschoben wird. Damit dies erkannt wird, sind mit den Vorsprüngen 41 bzw. der Abstützfläche 39 Kontaktelemente bzw. Schaltelemente (nicht dargestellt) verbunden, so dass durch Abheben eines einzigen Vorsprunges 41 vom Gehäuse 33 das Kontaktelement aktviert bzw. deaktiviert wird und somit ein Signal vom Kontaktelement bzw. Schaltelement an eine angeschlossene Steuervorrichtung 4 oder den Roboter weitergeleitet wird.

Weiters ist auf der gegenüberliegenden Seite des Austritts des Kupplungsmittels 34 ebenfalls eine Öffnung 45 im Gehäuse 33 angeordnet, so dass die über das Schlauchpaket 23 zugeführten Leitungen in das Gehäuse 33 an das Kupplungsmittel 34 geführt werden können. Bevorzugt wird hierbei noch ein Fortsatz bzw. ein Gewinde 46 angeordnet, um einen Außenschlauch des Schlauchpaketes 23 mit dem Gehäuse 33 zu verbinden. Dadurch wird erreicht, dass das Gewicht des Schlauchpaketes 23 nicht direkt auf das Kupplungsmittel 34 einwirkt, sondern auf das Gehäuse 33 der Abschaltbox 27 übertragen wird. Somit können die Federelemente 44 für die Lagerung des Kupplungsmittels 34 schwächer ausgelegt werden, so dass das Ansprechverhalten der Abschaltbox 27 wesentlich verbessert wird.

Grundsätzlich kann also gesagt werden, dass die Abschaltbox 27 dazu dient, dass eine Kollision des an der Abschaltbox 27 befestigten Brennerkörpers 28 mit einem Gegenstand erkannt wird. Dies erfolgt durch eine Verschiebung bzw. Bewegung des Kupplungsmittels 34 im Inneren des Gehäuses 33, wodurch ein Abheben eines Vorsprunges 41 stattfindet und dabei ein Signal abgegeben wird. Wesentlich ist dabei, dass das Kupplungsmittel 34 dabei derart im Gehäuse 33 gelagert wird, dass beim Eintritt einer Kollision eine definierte Verschiebung, insbesondere ein Abheben der punktuellen Lagerungen im Gehäuse 33 der Abschaltbox 27, eintritt. Denn somit ist es möglich, dass eine entsprechende Erkennung der Bewegung des Kupplungsmittels 34 durch einfaches Anordnen von Kontaktelementen bzw. Schaltelementen durchgeführt werden kann und somit der Aufbau wesentlich vereinfacht wird.

## Patentansprüche

1. Abschaltbox für eine Roboteranlage, mit einem in einem Gehäuse (33) federnd gelagerten und mit Kontakt- bzw. Schaltelementen verbundenen Kupplungsmittel (34), welches zum Anschluss an einen Brennerkörper (28) und ein Schlauchpaket (23) oder einen Brennergriff (29), der mit dem Schlauchpaket (23) verbunden ist, ausgebildet ist, wobei im aus zwei Teilen (31, 32) bestehenden-Gehäuse (33) zwei einander gegenüberliegende Öffnungen (35, 45) zum Anschluss des Kupplungsmittels (34) an den Brennerkörper (28) und zum Anschluss des Kupplungsmittels (34) an das Schlauchpaket (23) oder den Brennergriff (26) vorgesehen sind, wobei das Kupplungsmittel (34) eine Abstützfläche (39) zur punktuellen Anlage am Gehäuse (33) aufweist, **dadurch gekennzeichnet, dass** die Abstützfläche (39) mit den Kontakt- bzw. Schaltelementen verbunden ist, so dass durch Abheben der Abstützfläche (39) vom Gehäuse (33) das Kontakt- bzw. Schaltelement aktviert bzw. deaktiviert wird und ein Signal vom Kontakt- bzw. Schaltelement an eine angeschlossene Steuervorrichtung oder die Roboteranlage weitergeleitet wird.

2. Abschaltbox nach Anspruch 1, **dadurch gekennzeichnet, dass** das Gehäuse (33) zwischen dem Brennerkörper (28) und dem Schlauchpaket (23) angeordnet ist.

3. Abschaltbox nach Anspruch 1, **dadurch gekennzeichnet, dass** das Gehäuse (33) zwischen dem Brennerkörper (28) und dem Brennergriff (29), an dem das Schlauchpaket (23) angeschlossen ist, angeordnet ist.

4. Abschaltbox nach einem der Ansprüche 1 bis 3, **dadurch gekennzeichnet, dass** das Kupplungsmittel (34) gegenüber dem Gehäuse (33) isoliert ist.

5. Abschaltbox nach einem oder mehreren der Ansprüche 1 bis 4, **dadurch gekennzeichnet, dass** das Kupplungsmittel (34) durch die eine Öffnung (35) aus dem Gehäuse (33) herausragt, wogegen das weitere Ende des Kupplungsmittels (34) im Inneren des Gehäuses (33) endet.

6. Abschaltbox nach einem der Ansprüche 1 bis 5, **dadurch gekennzeichnet, dass** die Abstützfläche (39) direkt am Kupplungsmittel (34) ausgebildet ist.

7. Abschaltbox nach einem der Ansprüche 1 bis 5, **dadurch gekennzeichnet, dass** die Abstützfläche (39) durch einen Außenring (40) mit L-förmigem Querschnitt gebildet ist.

8. Abschaltbox nach einem der Ansprüche 1 bis 7, **dadurch gekennzeichnet, dass** am Außenring (40) bzw. an der Abstützfläche (39) mehrere Vorsprünge (41) zur punktuellen Anlage am Gehäuse (33) angeordnet sind.

9. Abschaltbox nach einem oder mehreren der Ansprüche 1 bis 8, **dadurch gekennzeichnet, dass** die Befestigung des Kupplungsmittels (34) mit einer Schraubverbindung (42) durch den Außenring (40) bzw. die Abstützfläche (39) erfolgt, wobei zwischen einem Schraubenkopf (43) und dem Außenring (40) bzw. der Abstützfläche (39) ein Federelement (44) angeordnet ist.

10. Abschaltbox nach Anspruch 9, **dadurch gekennzeichnet, dass** die Vorsprünge (41) mit den Kontakt- bzw. Schaltelementen verbunden sind.

11. Abschaltbox nach einem oder mehreren der Ansprüche 1 bis 10, **dadurch gekennzeichnet, dass** an einer Seite des Gehäuses (33) ein Fortsatz bzw. ein Gewinde (46) zur Verbindung mit einem Außenschlauch des Schlauchpaketes (23) angeordnet ist.

## Claims

1. A switch-off box for a robot system, including a coupling means (34) resiliently mounted in a housing (33) and connected with contacting or switching elements, respectively, the coupling means (34) being designed to be connected to a torch body (28) and a hose pack (23) or a torch handle (29) connected with the hose pack (23), wherein two oppositely located openings (35, 45) are provided in the housing (33) comprised of two parts (31, 32), for the connection of the coupling means (34) to the torch body (28) and for the connection of the coupling means (34) to the hose pack (23) or the torch handle (26), the coupling means (34) comprising a supporting surface (39) for punctual contact on the housing (33), **characterised in that** the supporting surface (39) is connected with the contacting or switching elements, respectively, in a manner that the respective contacting or switching element, respectively, will be activated or deactivated by the lifting of the supporting surface (39) from the housing (33) and a signal will be transmitted from the contacting or switching element, respectively, to a connected control device, or the robot system.

2. A switch-off box according to claim 1, **characterised in that** the housing (33) is arranged between the torch body (28) and the hose pack (23).

3. A switch-off box according to claim 1, **characterised in that** the housing (33) is arranged between the torch body (28) and the torch handle (29), to which the hose pack (23) is connected.

4. A switch-off box according to any one of claims 1 to 3, **characterised in that** the coupling means (34) is insulated relative to the housing (33).

5. A switch-off box according to one or several of claims 1 to 4, **characterised in that** the coupling means (34) projects out of the housing (33) through an opening (35), whereas the other end of the coupling means (34) terminates in the interior of the housing (33).

6. A switch-off box according to any one of claims 1 to 5, **characterised in that** the supporting surface (39) is directly formed on the coupling means (34).

7. A switch-off box according to any one of claims 1 to 5, **characterised in that** the supporting surface (39) is formed by an external ring (40) having an L-shaped cross section.

8. A switch-off box according to any one of claims 1 to 7, **characterised in that** several projections (41) are arranged on the external ring (40) and on the supporting surface (39), respectively, for punctual contact on the housing (33).

9. A switch-off box according to one or several of claims 1 to 8, **characterised in that** the fixation of the coupling means (34) is realised by the aid of a screw connection (42) through the external ring (40) and the supporting surface (39), respectively, with a spring element (44) being arranged between a screw head (43) and the external ring (40) and the supporting surface (39), respectively.

10. A switch-off box according to claim 9, **characterised in that** the projections (41) are connected with the contacting or switching elements, respectively.

11. A switch-off box according to one or several of claims 1 to 10, **characterised in that** a projection or thread (46), respectively, is arranged on one side of the housing (33) for connection with an external hose of the hose pack (23).

## Revendications

1. Boîte de coupure pour une installation robotique, comprenant un moyen d'accouplement (34) élastiquement monté dans un boîtier (33) et équipé d'éléments de contact ou de commande, ce moyen étant conçu pour être raccordé à un corps de torche (28) et un faisceau de tuyaux flexibles (23) ou une poignée de torche (29) reliée au faisceau de tuyaux flexibles (23), deux ouvertures (35, 45) opposées l'une à l'autre étant prévues dans le boîtier (33) composé de deux parties (31, 32) pour le raccordement du moyen d'accouplement (34) au corps de torche (28) et pour le raccordement du moyen d'accouplement (34) au faisceau de tuyaux flexibles (23) ou à la poignée (26) de la torche, le moyen d'accouplement (34) comprenant une surface d'appui (39) prévue pour un contact ponctuel avec le boîtier (33),
**caractérisée en ce que** la surface d'appui (39) est reliée aux éléments de contact ou de commande, de sorte qu'un décollement de la surface d'appui (39) du boîtier (33) active ou désactive l'élément de contact ou de commande, et qu'un signal soit transmis de l'élément de contact ou de commande à un dispositif raccordé de commande ou à l'installation robotique.

2. Boîte de coupure selon la revendication 1, **caractérisée en ce que** le boîtier (33) est disposé entre le corps de torche (28) et le faisceau de tuyaux flexibles (23).

3. Boîte de coupure selon la revendication 1, **caractérisée en ce que** le boîtier (33) est disposé entre le corps de torche (28) et la poignée de torche (29) sur laquelle est branché le faisceau de tuyaux flexibles (23).

4. Boîte de coupure selon l'une des revendications 1 à 3, **caractérisée en ce que** le moyen d'accouplement (34) est isolé face au boîtier (33).

5. Boîte de coupure selon l'une ou plusieurs des revendications 1 à 4, **caractérisée en ce que** le moyen d'accouplement (34) fait saillie hors du boîtier (33) à travers l'une (35) des ouvertures, alors que l'autre extrémité du moyen d'accouplement (34) se termine à l'intérieur du boîtier (33).

6. Boîte de coupure selon l'une des revendications 1 à 5, **caractérisée en ce que** la surface d'appui (39) est conformée directement sur le moyen d'accouplement (34).

7. Boîte de coupure selon l'une des revendications 1 à 5, **caractérisée en ce que** la surface d'appui (39) est constituée par une bague extérieure (40) ayant une section transversale en forme de L.

8. Boîte de coupure selon l'une des revendications 1 à 7, **caractérisée en ce que** plusieurs saillies (41) sont aménagées sur la bague extérieure (40) ou sur la surface d'appui (39) pour venir en contact ponctuel avec le boîtier (33).

9. Boîte de coupure selon l'une ou plusieurs des revendications 1 à 8, **caractérisée en ce que** la fixation du moyen d'accouplement (34) s'effectue au moyen d'un assemblage à vis (42) par la bague extérieure (40) et la surface d'appui (39), un élément ressort (44) étant disposé entre une tête de vis (43) et la bague extérieure (40) ou la surface d'appui (39).

10. Boîte de coupure selon la revendication 9, **caractérisée en ce que** les saillies (41) sont reliées aux éléments de contact ou de commande.

11. Boîte de coupure selon l'une ou plusieurs des revendications 1 à 10, **caractérisée en ce qu'**une extension ou un filetage (46) est prévu(e) d'un côté du boîtier (33), en vue d'être relié(e) à une gaine extérieure du faisceau de tuyaux flexibles (23).
